# EUROPÄISCHE PATENTANMELDUNG

(11) **EP 0 567 998 A1**
(43) Veröffentlichungstag der Anmeldung: **03.11.1993**
(21) Anmeldenummer: 93106798.7
(22) Anmeldetag: 27.04.1993
(51) Int. Cl.: C08G 69/32, D01F 6/60

(54) **Verfahren zur Herstellung von Faserbildenden meta-Aramiden**

(30) Priorität: 30.04.1992 DE 4214460
(71) Anmelder: HOECHST AKTIENGESELLSCHAFT, D-65926 Frankfurt am Main (DE)
(72) Erfinder: Jung, Holger, Dr., W-6272 Niedernhausen (DE); Klein, Peter, Dr., W-6200 Wiesbaden (DE); Kampschulte, Uwe, dr., W-6234 Hattersheim (DE)

(57) **Zusammenfassung**

Beschrieben wird ein Verfahren zur Herstellung von direkt verspinnbaren Polymerlösungen, die als faserbildende Substanz Polymere enthalten, die mindestens 95 Mol%, bezogen auf das Polymere, der wiederkehrenden Struktureinheit der allgemeinen Formel I, aufweisen

[-CO-R¹-CO-NH-R²-NH-] (I),

und bis zu 5 Mol.-% Struktureinheiten, wie sie bei der Umsetzung von aromatischen, aliphatischen oder cycloaliphatischen Dicarbonsäuredichloriden und/oder Diaminen entstehen.

Dabei bedeuten R¹ und R² unabhängig voneinander Naphthalin-1,6-, Naphthalin-1,7-, Naphthalin-2,7-, Biphenyl-3,4'- oder 1,3-Phenylenreste. Die Polymeren werden durch Umsetzung von Diaminen der Formel (II) mit Dicarbonsäuredichloriden der Formel (III) in Lösung hergestellt

H₂N-R²-NH₂ (II),

ClOC-R¹-COCl (III),

worin R¹ und R² die weiter oben angegebene Bedeutung aufweisen.

Das Verfahren umfaßt die Maßnahmen
a) Vorlage der Diamine als Lösung in N-Methylpyrrolidon,
b) Zugabe der Dicarbonsäuredichloride zu dieser Lösung,
c) Einsatz von Ausgangsmonomeren mit einer Reinheit von größer als 99,9 % und einem Wassrgehalt von weniger als 70 ppm, gemessen nach der Methode von Karl Fischer,
d) Polykondensation unter Zwangsführung der Reaktionslösung bei Temperaturen zwischen - 20 und 100°C,
e) Abbrechen der Polykondensation beim Erreichen bestimmten einer inhärenten Viskosität des Polymeren von mindestens 1,5 dl/g, gemessen an einer 0,5 %igen Polymerlösung in konz. H₂SO₄ bei 25°C, durch Neutralisieren der Reaktionslösung durch Zugabe von basischen Alkali- und/oder Erdalkalisalzen.

## Beschreibung

Die vorliegende Erfindung betrifft ein neues Verfahren zur Herstellung von bestimmten faserbildenden aromatischen Polyamiden (im folgenden Aramide genannt). Dabei handelt es sich um ein Verfahren zur Herstellung von meta-Aramiden sowie um neue nach diesem Verfahren erhältliche meta-Aramide mit hohem Molekulargewicht und enger Molekulargewichtsverteilung.

Meta-Aramide, wie Poly(isophthalsäure-m-phenylendiamid), sind handelsübliche Polymere, die insbesondere zu Fasern mit guten mechanischen Eigenschaften, wie hoher Festigkeit, hoher Dehnung, guter Flammbestänigkeit, und mit guter Chemikalienbeständigkeit verarbeitet werden können.

Üblicherweise werden diese Polymeren in organischen nichtbasischen Lösungsmitteln, insbesondere in halogenierten organischen Lösungsmitteln, hergestellt. Beispiele für solche Herstellungsverfahren sind in der US-A-3,094,511 oder in der DE-AS-1,107,399 zu finden. Andere Herstellungsmethoden arbeiten mit Dimethylacetamid als Lösungsmittel (US-A-3,063,966). Nach der Herstellung werden die Polymeren in der Regel ausgefällt und nach dem Waschen in dem Spinnlösungsmittel, üblicherweise einem aprotischen organischen Amid-Lösungsmittel, wieder aufgelöst (DE-PS 1,243,820, DE-PS 2,325,139).

Die direkte Herstellung der Spinnlösung durch Polykondensation im vorgesehenen Spinnlösungsmittel wird nur bei Synthese in Dimethylacetamid (DMAc) und anschließendem Trockenspinnprozeß realisiert. DMAc ist basisch genug, um den entstehenden Chlorwasserstoff zu binden. Nach der Neutralisation entstehen bei 1 mol Polymer auch 1 mol eines, je nach verwendetem Neutralisationsmittel, Erdalkali oder/und Alkali Salzes. Normalerweise sind dies ca. 50 Gew.-% der Menge des Aramids. Da dieses Salz in der angegebenen Menge bei der Naßverspinnung stört, kann nur durch Trockenspinnen ein Faden gebildet werden (US-A-3,360,598).

Ferner ist aus der DE-A-3,835,401 ein Verfahren zur Herstellung von aromatischen Copolyamiden bekannt, bei dem man aromatische Dicarbonsäuredichloride und Diamine, die Valenzbindungen in para-Stellung besitzen, in einem bekannten Polyamid-Lösungsmittel, unter anderem auch in N-Methylpyrrolidon, bei erhöhter Temperatur polykondensiert.

Die Polykondensation von 1,3-Phenylendiamin und Isophthalsäure-dichlorid in N-Methylpyrrolidon ist zwar aus der JP-A-49-130,495 an sich bekannt, doch besitzen die dort beschriebenen m-Aramide für die Fadenbildung mit guten textilen Daten kein ausreichend hohes Molekulargewicht. Das mit dem vorbekannten Verfahren erreichbare durchschnittliche Molekulargewicht wird mit höchstens 50000 angegeben. In der Schrift wird der Einfluß des Feuchtigkeitsgehalts des Lösungsmittels auf den Polymerisationsgrad untersucht.

Es wurde jetzt gefunden, daß man die Polykondensation von meta-Aramiden zu hohen Molekulargewichten direkt in NMP als Spinnlösungsmittel durchführen kann. Die Methode führt zu meta-Aramiden mit sehr kleinem Quotienten der Gewichts- und Zahlenmittel des Molekulargewichts M_{w}/Mₙ, was einer engen Molekulargewichtsverteilung entspricht und sich günstig für die Verarbeitung von Fasern auswirkt. Dies ermöglicht beträchtliche ökonomische Verbesserungen des Faserherstellungsverfahrens, da beispielsweise der Aus- und ggf. Umfällungsschritt des Polymeren aus dem Polykondensationslösungsmittel entfallen kann, oder da Rückgewinnungsanlagen für das Polykondensationslösungsmittel entfallen können.

Außerdem läßt sich die vorgesehene Verfahrensführung ohne umweltbelastende halogenierte organische Lösungsmittel durchführen.

Die vorliegende Erfindung betrifft ein Verfahren zur Herstellung von direkt verspinnbaren Polymerlösungen von in N-Methylpyrrolidon gelösten faserbildenden Polymeren, die mindestens 95 Mol-%, bezogen auf das Polymere, wiederkehrende Struktureinheiten der allgemeinen Formel (I), aufweisen

-[CO-R¹-CO-NH-R²-NH-]- (I),

in der R¹ und R² unabhängig voneinander zweiwertige aromatische Reste sind, und die höchstens bis zu 5 Mol-% Struktureinheiten aufweisen, wie sie bei der Umsetzung von aromatischen, aliphatischen oder cycloaliphatischen Dicarbonsäuredichloriden und/oder Diaminen entstehen, durch Umsetzung von Diaminen der allgemeinen Formel (II) mit Dicarbonsäuredichloriden der allgemeinen Formel (III)

H₂N-R²-NH₂ (II),

ClOC-R¹-COCl (III),

in denen R¹ und R² unabhängig voneinander zweiwertige aromatische Reste sind, und gegebenenfalls bis zu 5 Mol-%, bezogen auf die Gesamtmenge an Monomeren, an aromatischen, aliphatischen oder cycloaliphatischen Dicarbonsäuredichloriden und/oder Diaminen, in folgenden Schritten
a) Vorlage der Diamine als Lösung in N-Methylpyrrolidon (NMP),
b) Zugabe der Dicarbonsäuredichloride zu dieser Lösung,
c) Polykondensation unter Zwangsführung der Reaktionslösung bei Temperaturen zwischen - 20 und 100°C, und
d) Abbrechen der Polykondensation beim Erreichen einer bestimmten inhärenten Viskosität des Polymeren, durch Zugabe eines monofunktionellen Kettenabbruchmittels und Neutralisieren der Reaktionslösung durch Zugabe von basischen Alkali- und/oder Erdalkalisalzen oder durch Neutralisieren der Reaktionslösung ohne Zugabe eines Kettenabbruchmittels, dadurch gekennzeichnet, daß man als Diamine oder allgemeine Formel (II) solche verwendet, in denen der Rest R² vom Naphthalin-1,6-, Naphthalin-1,7-, Naphthalin-2,7-, Biphenyl-3,4'- oder 1,3-Phenylendiamin herstammt, man als Dicarbonsäuredichloride der allgemeinen Formel (III) solche verwendet, in denen der Rest R¹ von der Naphthalin-1,6-, Naphthalin-1,7-, Naphthalin-2,7-, Biphenyl-3,4'-dicarbonsäure oder Isophthalsäure herstammt, man die Ausgangsmonomeren mit einer Reinheit von größer als 99,9 % und einem Wassergehalt von weniger als 70 ppm, gemessen nach der Methode von Karl Fischer einsetzt und die Polykondensation beim Erreichen einer inhärenten Viskosität des Polymeren von mindestens 1,5 dl/g, gemessen an einer 0,5 %igen Polymerlösung in konz. H₂SO₄ bei 25 °C abbricht.

Neben den wiederkehrenden Struktureinheiten der Formel I können die m-Aramide dieser Erfindung noch bis zu 5 Mol %, bezogen auf das Polymere, an sonstigen zweiwertigen aromatischen, aliphatischen oder cycloaliphatischen Resten aufweisen, die sich von aromatischen, aliphatischen oder cycloaliphatischen Dicarbonsäuredichloriden und/oder Diaminen ableiten.

Mindestens 95 Mol% der m-Aramide dieser Erfindung sind aus wiederkehrenden Struktureinheiten der Formel I aufgebaut, wobei sich die Reste R¹ und/oder R² im Rahmen der gegebenen Definition innerhalb eines Moleküls auch unterscheiden können.

R¹ und/oder R² bedeutet vorzugsweise 1,3-Phenylen.

Das erfindungsgemäße Herstellungsverfahren umfaßt die Umsetzung von aromatischen Dicarbonsäuredichloriden der Formel (III) mit aromatischen Diaminen der Formel (II), wie jeweils oben definiert. Die Verbindungen der Formel (II) und/oder der Formel (III) können auch in Form von Mischungen eingesetzt werden. Gegebenenfalls setzt man bis zu 5 Mol%, bezogen auf die Gesamtmenge an Monomeren, an aromatischen, aliphatischen oder cycloaliphatischen Dicarbonsäuredichloriden und/oder Diaminen ein. Als aromatische Monomere dieses Typs seien para-Monomere erwähnt.

Die Mengenverhältnisse der Diamine zu den Dicarbonsäuredichloriden sind im Einzelfall so zu wählen, daß Aramide mit den gewünschten hohen Molekulargewichten entstehen. Der molare Anteil aller Dicarbonsäuredichloride wird zweckmäßigerweise so gewählt, daß er praktisch dem molaren Anteil aller Diamine entspricht. Die molaren Mengen beider Monomertypen sollten sich nicht um mehr als etwa 1 %, vorzugsweise um nicht mehr als 0,2 % unterscheiden.

Geeignete aromatische Dicarbonsäuren, von denen sich die Monomeren der Formel (III) ableiten, sind Naphthalin-1,6-dicarbonsäure, Naphthalin-1,7-dicarbonsäure, Naphthalin-2,7-dicarbonsäure, Biphenyl-3,4'-dicarbonsäure und insbesondere Isophthalsäure.

Geeignete aromatische Diamine der Formel (II), sind Naphthalin-1,6-diamin, Naphthalin-1,7-diamin, Naphthalin-2,7-diamin, Biphenyl-3,4'-diamin und insbesondere 1,3-Phenylendiamin.

Die einzusetzenden Monomeren müssen in einer Reinheit von mehr als 99,9 % vorliegen und einen Wassergehalt von weniger als 70 ppm, vorzugsweise weniger als 50 ppm aufweisen. Diese Maßnahmen sind notwendig, um die gewünschten hohen Molekulargewichte zu erreichen. Der Wassergehalt wird nach der an sich bekannten Methode von Karl Fischer bestimmt.

Die Polykondensation wird als Lösungspolykondensation in NMP durchgeführt.

Dazu werden die Diamine in NMP gelöst und dazu werden die Dicarbonsäuredichloride zudosiert. Die Dicarbonsäuredichloride können dabei in der Form von Feststoffen, feinzerteilt, vorzugsweise als Schmelze oder besonders bevorzugt gelöst in NMP eingesetzt werden.

Die Zudosierung der Dicarbonsäuredichloride zur Reaktionslösung erfolgt in einer solchen Geschwindigkeit, daß die stark exotherme Reaktion unter Kontrolle bleibt. Vorzugsweise erfolgt die Zudosierung in einer Weise, daß die Temperatur der Reaktionsmasse 70°C nicht übersteigt. Dies kann durch die Steuerung der Zugabegeschwindigkeit und insbesondere durch ein besonders heftiges Umrühren der Reaktionslösung erfolgen.

Die Polykondensation erfolgt unter Zwangsführung der Reaktionslösung bei Temperaturen zwischen - 20 und 100°C. Bevorzugte Reaktionstemperaturen liegen im Bereich von 40 bis 60 °C.

Nach Erreichen des gewünschten Molekulargewichtes ausgedrückt durch eine inhärente Viskosität von mindestens 1,5 dl/g (wie oben definiert) wird die Polykondensation abgebrochen. Dies erfolgt durch Neutralisation der sauren Reaktionslösung durch basische Alkali- und/oder Erdalkaliverbindungen. Vor diesem Schritt kann der Abbruch der Reaktion zweckmäßig durch Zugabe von monofunktionellen Kettenabrechern, wie Monocarbonsäurechloriden, insbesondere Acetylchlorid oder Benzoylchlorid durchgeführt werden.

Beispiele für basische Alkali- und/oder Erdalkaliverbindungen sind Lithiumhydroxid und insbesondere Calciumoxid und/oder Calciumhydroxid.

Das erfindungsgemäße Verfahren wird vorzugsweise so ausgestaltet, daß die Konzentration des Polymeren nach Beendigung der Polykondensation 15 bis 25 Gew.-%, bezogen auf die Reaktionslösung, beträgt. In dieser Ausführungsform fällt die Spinnlösung in einer hohen Polymerkonzentration an, was sich günstig auf die Produktivität des anschließenden Spinnverfahrens auswirkt.

Eine weitere vorteilhafte Ausgestaltung des erfindungsgemäßen Verfahrens betrifft die Menge der basischen Alkali- und/oder Erdalkalisalze. Diese entstehen bei der Neutralisation in einer zum Aramid äquimolaren Menge. Für die Reaktionslösung ergibt sich eine Konzentration der Salze von 5 bis 13 Gew.-%, bezogen auf die Reaktionslösung.

Besonders bevorzugt führt man das erfindungsgemäße Verfahren so, daß das Abbrechen der Polykondensation beim Erreichen einer inhärenten Viskosität des Polymeren im Bereich von 1,5 bis 2,5 dl/g, gemessen an einer 0,5 %igen Polymerlösung in H₂SO₄ bei 25°C, erfolgt.

Besonders hohe Viskositäten lassen sich erzielen, wenn die Zwangsführung der Reaktionslösung durch Rühren mit einem Doppelwendelrührer oder einem Planetenmischknetreaktor erfolgt.

Die Erfindung betrifft ferner aromatische Polyamide enthaltend mindestens 95 Mol%, bezogen auf das Polymere, der wiederkehrenden Struktureinheit der Formel I, wie oben definiert, mit einer inhärenten Viskosität des Polymeren von mindestens 1,5 dl/g, gemessen an einer 0,5 %igen Polymerlösung in H₂SO₄ bei 25°C, erhältlich nach dem oben definierten Verfahren, dadurch gekennzeichnet, daß diese meta-Aramide eine enge Molekulargewichtsverteilung M_{w} zum Zahlenmittel des Molekulargewichts Mₙ aufweisen, wobei die Mittelwerte durch Gelpermeationschromatografie von 0,05 %igen Polymerlösungen in NMP bei 65°C gemessen wurden.

Meta-Aramide mit diesen Eigenschaften zeichnen sich von vorbekannten meta-Aramiden durch folgende Unterschiede aus:
1) eine sehr enge Molekulargewichtsverteilung M_{w}/Mₙ, und
2) hohe inhärente Viskositäten.

Das Ausformen der Ausformlösung zu einem geformten Artikel kann nach dem Trockendüsen-Naßspinnverfahren erfolgen.

Die Ausformlösung wird durch eine Trockennaßspinndüse in eine koagulierende Flüssigkeit extrudiert. Dabei ist es gewöhnlich vorteilhaft, wenn die Koagulationsflüssigkeit aus Wasser oder aus einer wäßrigen, ein polares organisches Lösungsmittel enthaltenden Lösung besteht. Dabei kann das polare organische Lösungsmittel unter denselben Amid-Lösungsmitteln ausgewählt werden, die gewöhnlich für das Lösen des Aramids verwendet werden.

Als polares organisches Lösungsmittel wird in der Koagulationsflüssigkeit vorzugsweise dasselbe Lösungsmittel verwendet, welches in der Ausformlösung enthalten ist. Die Koagulationsflüssigkeit wird vorzugsweise bei einer Temperatur zwischen 0°C und der Siedetemperatur der Koagulationsflüssigkeit bei Atmosphärendruck eingesetzt.

Das polare organische Lösungsmittel liegt in der Koagulationsflüssigkeit vorzugsweise in einer Konzentration zwischen 70 Gew.-% und weniger vor, insbesondere zwischen 50 Gew.-% und weniger.

Das vorstehend erläuterte Ausformverfahren ist besonders für die Herstellung von Fasern aus einer Ausformlösung geeignet.

Die geformten Fasern werden gewöhnlich einem Streckvorgang unterworfen, durch den nicht nur die mechanischen Eigenschaften, wie z.B. die Zugfestigkeit und der Elastizitätsmodul, gefördert werden sondern auch die thermischen Eigenschaften, wie z.B. die thermische Stabilität der so hergestellten Filamente.

Filamente aus den erfindungsgemäßen Aramiden werden in der Regel verstreckt, um eine mechanische Festigkeit zu realisieren. Das Verstreckungsverhältnis beträgt dabei üblicherweise etwa 1:2 bis 1:5. Die Verstrecktemperatur liegt dabei in der Regel zwischen 200 und 400°C, vorzugsweise zwischen 250 und 350°C.

Das Strecken kann in einem einzigen Schritt, in zwei Schritten oder in mehreren Schritten ausgeführt werden, wobei zum Aufheizen eine Heizplatte oder eine zylindrische Heizvorrichtung verwendet werden kann. Außerdem können die gestreckten Filamente einer weiteren Wärmebehandlung bei gleicher oder höherer Temperatur unterworfen werden, um ihre kristalline Struktur zu fördern.

Die Fasern aus einem Aramid gemäß der Erfindung, welche gute mechanische und thermische Eigenschaften besitzen können auf die verschiedenste Weise industriell eingesetzt werden, beispielsweise als wärmebeständige Isolationsmaterialien, zur Herstellung von Filtergeweben und als leichte Dämmstoffe.

Weitere Eigenschaften und Vorteile der Erfindung werden nachstehend anhand von Beispielen noch näher erläutert.

Dabei versteht es sich jedoch, daß die Erfindung nicht auf die Ausführungsbeispiele beschränkt ist. Vielmehr stehen dem Fachmann, ausgehend von den Ausführungsbeispielen, zahlreiche Möglichkeiten für Änderungen und/oder Ergänzungen zu Gebote, ohne daß er dabei den Grundgedanken der Erfindung verlassen müßte.

### Beispiel 1

324.5g (3mol) m-Phenylendiamin werden in 2396 ml NMP gelöst und zwischen -10 und 70°C mit 609g (3mol) Isophtaloyldichlorid versetzt. Das Säurechlorid wird in fester Form zudosiert. Nach Zugabe von ca. 98 mol% ist ein Anstieg der Viskosität zu beobachten. Bei Erreichen eines definierten Rührwiderstandes 35 Nm bei 50 Upm und 50°C wird die Reaktion durch Zugabe von Acetylchlorid abgestoppt. Dann erfolgt die Neutralisation mit 40 g CaO (50 %ige Suspension in NMP). Es entstehen 714 g Polymer, 333 g CaCl₂ und 54 g Wasser. Es liegt eine homogene Lösung in NMP vor (20 Gew.-%). Die inhärente Viskosität in konz. H₂SO₄ bei 25°C beträgt 1.7 dl/g. Die Lösung wird noch 2 Stunden nachgerührt und dann über 10 µ filtriert.

Die filtrierte Spinnlösung wird mittels Trockendüsen-Naßspinnverfahren zu Fasern geformt. Die Reißfestigkeit beträgt 33 cN/tex bei 16% Dehnung . Der Modul beträgt 10 N/tex.

## Patentansprüche

1. Verfahren zur Herstellung von direkt verspinnbaren Polymerlösungen von in N-Methylpyrrolidon gelösten faserbildenden Polymeren, die mindestens 95 Mol-%, bezogen auf das Polymere, wiederkehrende Struktureinheiten der allgemeinen Formel (I), aufweisen
[-CO-R¹-CO-NH-R²-NH-] (I),
in der R¹ und R² unabhängig voneinander zweiwertige aromatische Reste sind und die höchstens bis zu 5 Mol-% Struktureinheiten aufweisen, wie sie bei der Umsetzung von aromatischen, aliphatischen oder cycloaliphatischen Dicarbonsäuredichloriden und/oder Diaminen entstehen, durch Umsetzung von Diaminen der allgemeinen Formel (II) mit Dicarbonsäuredichloriden der allgemeinen Formel (III)
H₂N-R²-NH₂ (II),
ClOC-R¹-COCl (III),
in denen R¹ und R² unabhängig voneinander zweiwertige aromatische Reste sind, und gegebenenfalls bis zu 5 Mol-%, bezogen auf die Gesamtmenge an Monomeren, an aromatischen, aliphatischen oder cycloaliphatischen Dicarbonsäuredichloriden und/oder Diaminen, in folgenden Schritten
a) Vorlage der Diamine als Lösung in N-Methylpyrrolidon,
b) Zugabe der Dicarbonsäuredichloride zu dieser Lösung,
c) Polykondensation unter Zwangsführung der Reaktionslösung bei Temperaturen zwischen - 20 und 100°C,
d) Abbrechen der Polykondensation beim Erreichen bestimmten einer inhärenten Viskosität des Polymeren durch Zugabe eines monofunktionellen Kettenabbruchmittels nach Neutralisieren der Reaktionslösung durch Zugabe von basischen Alkali- und/oder Erdalkalisalzen oder durch Neutralisieren der Reaktionslösung ohne Zugabe eines Kettenabbruchmittels, dadurch gekennzeichnet, daß man als Diamine der allgemeinen Formel (II) solche verwendet, in denen der Rest R² vom Naphthalin-1,6-, Naphthalin-1,7-, Naphthalin-2,7-, Biphenyl-3,4'- oder 1,3-Phenylendiamin herstammt, man als Dicarbonsäuredichloride der allgemeinen Formel (III) solche verwendet, in denen der Rest R¹ von der Naphthalin-1,6-, Naphthalin-1,7-, Naphthalin-2,7-, Biphenyl-3,4'-dicarbonsäure oder Isophthalsäure herstammt, man die Ausgangsmonomeren mit einer Reinheit von größer als 99,9 % und einem Wassergehalt von weniger als 70 ppm, gemessen nach der Methode von Karl Fischer einsetzt und die Polykondensation beim Erreichen einer inhärenten Viskosität der Polymeren von mindestens 1,5 dl/g, gemessen an einer 0,5 %igen Polymerlösung in konz. H₂SO₄ bei 25°C abbricht.

2. Verfahren nach Anspruch 1, dadurch gekennzeichnet, daß die Dicarbonsäuredichloride, in fester Form zur Reaktionslösung zugegeben werden.

3. Verfahren nach Anspruch 1, dadurch gekennzeichnet, daß die Zugabe der Dicarbonsäuredichloride zur Reaktionslösung in einer solchen Geschwindigkeit erfolgt, daß die Temperatur innerhalb dieser Lösung 70°C nicht überschreitet.

4. Verfahren nach Anspruch 1, dadurch gekennzeichnet, daß die Konzentrationen der Monomeren der allgemeinen Formeln (II) und (III) in der Reaktionslösung so gewählt werden, daß die Konzentration des Polymeren nach Beendigung der Polykondensation 15 bis 25 Gew.-%, bezogen auf die Reaktionslösung, beträgt.

5. Verfahren nach Anspruch 1, dadurch gekennzeichnet, daß die basischen Alkali und/oder Erdalkalisalzen in einer solchen Menge zu der Reaktionslösung gegeben werden, daß die Konzentration der Salze in dieser Lösung 5 bis 13 Gew.-%, bezogen auf die Reaktionslösung, beträgt.

6. Verfahren nach Anspruch 1, dadurch gekennzeichnet, daß man als Diamine und Dicarbonsäuredichloride solche verwendet, in denen R¹ und R² 1,3-Phenylenreste sind.

7. Verfahren nach Anspruch 1, dadurch gekennzeichnet, daß man als basisches Erdalkalisalz Calciumoxid oder Calciumhydroxid einsetzt.

8. Verfahren nach Anspruch 1, dadurch gekennzeichnet, daß man als monofunktionelles Kettenabbruchmittel, Acetylchlorid zusetzt.

9. Verfahren nach Anspruch 1, dadurch gekennzeichnet, daß das Abbrechen der Polykondensation beim Erreichen einer inhärenten Viskosität des Polymeren im Bereich von 1.5 bis 2.2 dl/g, gemessen an einer 0,5 %igen Polymerlösung in H₂SO₄ bei 25°C, erfolgt.

10. Verfahren nach Anspruch 1, dadurch gekennzeichnet, daß Zwangsführung der Reaktionslösung durch Rühren mit einem Doppelwendelrührer oder einem Planetenmischknetreaktor erfolgt.
